# EUROPÄISCHE PATENTSCHRIFT

(11) **EP 0 447 901 B1**
(45) Veröffentlichungstag und Bekanntmachung des Hinweises auf die Patenterteilung: **15.02.1995**
(21) Anmeldenummer: 91103633.3
(22) Anmeldetag: 09.03.1991
(51) Int. Cl.: B21J 15/10, B21J 15/00, F16B 19/10

(54) **Werkzeug zum Setzen von Spreiznieten**
Tool for setting of expandable rivets
Outillage pour poser des rivets expansibles

(30) Priorität: 20.03.1990 DE 4008829
(43) Veröffentlichungstag der Anmeldung: 25.09.1991
(73) Patentinhaber: Adolf Würth GmbH & Co. KG, D-74653 Künzelsau (DE)
(72) Erfinder: Haberstroh, Hardy, W-7741 Schönwald (DE); Bauer, Roland, W-7113 Neuenstein (DE)
(74) Vertreter: Patentanwälte Ruff, Beier, Schöndorf und Mütschele

(56) Entgegenhaltungen:
- EP-A- 0 065 111
- EP-A- 0 066 792
- DE-C- 3 731 807
- US-A- 4 709 841

## Beschreibung

Es ist, insbesondere im Kfz.-Bau, bekannt, zur Befestigung von Teilen Spreizniete zu verwenden. Diese Spreizniete können beispielsweise zum Befestigen von Verkleidungen, aber auch zum Befestigen von Kabelschellen o.dgl. verwendet werden. Bei der Befestigung von Schellen kann der Spreizniet an der Schelle aus Kunststoff einstückig angeformt sein. Die Spreizniete enthalten einen Teil, der durch eine Öffnung in einem Blech o.dgl. hindurchgesteckt wird und der durch einen Spreizkörper aufgespreizt wird. Dieser Spreizkörper ragt im nichtgespreizten Zustand, also vor der Montage, auf der Vorderseite des Spreizniets als Zapfen vor. Bislang ist es üblich, den vorstehenden Zapfen mit einer Kombizange anzufassen und den Spreizniet durch das Loch durchzudrücken. Anschließend wird mit einem Hammer der Zapfen eingeschlagen, bis dieser bündig mit der Oberfläche des Nietkopfs verläuft.

Spreizniete dieser Art werden häufig an schlecht zugänglichen Stellen eingesetzt, so daß der Arbeiter einiges Geschick beim Hantieren benötigt.

Es ist bereits ein Werkzeug zum Einsetzen von Spreiznieten mit den Merkmalen des ersten Teils des Anspruchs 1 bekannt (US-A-4709841). Bei diesem Werkzeug ist das Betätigungselement der Sperreinrichtung mit einem gewissen Abstand vom vorderen Ende des Griffs angeordnet und muß durch Verschwenken um eine senkrecht zur Längsachse des Werkzeugs laufende Achse betätigt werden. Es weist die Form eines schmalen Griffs auf, so daß es nur an einer bestimmten Stelle zugänglich ist. Der Griff des Werkzeugs weist eine Zylinderform mit einer ebenen Stirnseite auf. Da das Betätigungselement seitlich weit vorsteht, ist der Einsatz des Werkzeugs an räumlich engen Stellen erschwert.

Bei einem weiteren Werkzeug aus dem Dokument weist der Griff zwar eine etwas geeignetere Form auf, jedoch besitzt dieses Werkzeug keine Sperreinrichtung.

Der Erfindung liegt die Aufgabe zugrunde, ein Werkzeug zum Einsetzen von Spreiznieten od.dgl. zu schaffen, mit dem die Niete sowohl eingesetzt als auch gespreizt werden können. Das Werkzeug soll auch in ungünstigen räumlichen Bedingungen angewendet werden können.

Zur Lösung dieser Aufgabe schlägt die Erfindung ein Werkzeug mit den Merkmalen des Anspruchs 1 vor.

Da die Betätigungseinrichtung an dem dem freien Ende des Werkzeugschafts zugewandten Ende des Handgriffs angeordnet und um die Achse des Werkzeugschafts verdrehbar ist, läßt sich das Betätigungselement ohne Umfassen am Griff mit Daumen und Zeigefinger bedienen.

Zur Lösung der Aufgabe schlägt die Erfindung ebenfalls ein Werkzeug mit den Merkmalen des Anspruchs 2 vor. Dann kann das Betätigungselement durch Ziehen aus der Sperrstellung in die Freigabestellung überführt werden, also durch eine Bewegung entgegengesetzt zur Schubbewegung des Werkzeugs.

Das Werkzeug wird folgendermaßen benutzt. Der Spreizniet wird mit seinem überstehenden Zapfen in das vordere Ende des Schaftes eingesetzt. Dann wird bei verriegelter Sperreinrichtung der Spreizniet mit seinem zu spreizenden Teil in das Loch eingesetzt und eingeschoben. Hierbei muß eine gewisse Kraft aufgebracht werden, da die Spreizniete häufig in gespreiztem Zustand geformt sind. Sobald der Spreizniet richtig sitzt, was durch Anliegen einer Schulter an dem zu befestigenden Teil festgestellt werden kann und was der Benutzer durch Widerstand in der Hand spürt, wird die Sperreinrichtung gelöst und anschließend der Griff vorgeschoben. Dabei schiebt der Stößel mit seinem freien Ende den aus der Vorderseite des Spreizniets herausragenden Zapfen, der von dem Schaft des Werkzeugs noch geführt ist, in Richtung auf den Spreizniet, bis die Vorderseite des Zapfens bündig mit der Vorderseite des Spreizniets angeordnet ist.

Der Werkzeugschaft kann im Bereich seines freien Endes eine zylindrische Öffnung aufweisen, die etwa dem Durchmesser des Zapfens des Spreizniets entspricht. Um das Werkzeug jedoch auch für unterschiedliche Spreizniete anwendbar zu machen, schlägt die Erfindung in Weiterbildung vor, daß der Schaft im Bereich seines vorderen Endes eine Klemmeinrichtung für den Spreizniet aufweisen kann. Insbesondere greift die Klemmeinrichtung an dem der Aufspreizung dienenden Zapfen an.

Es kann erfindungsgemäß vorgesehen sein, daß die Klemmeinrichtung mindestens zwei Federarme aufweist, die durch Einschnitte oder Schlitze des Werkzeugschafts hindurchgreifen und den Zapfen des Spreizniets federnd festlegen.

Erfindungsgemäß kann vorgesehen sein, daß der Werkzeugschaft drehfest mit dem Griff verbunden ist. Der Werkzeugschaft läßt sich auf diese Weise in seiner axialen Verschiebung gegenüber dem Werkzeugschaft besonders gut führen, so daß das Werkzeug bei einfachem Aufbau sehr robust ausgebildet sein kann.

Die Erfindung schlägt vor, daß das Werkzeug eine Feder aufweisen kann, die das Werkzeug in eine Position beaufschlagt, in der das freie Ende des Stößels von dem freien Ende des Werkzeugschafts einen Abstand aufweist. In Normalstellung, die durch die Feder hergestellt wird, kann also der Spreizniet eingesetzt werden.

Die Erfindung sieht insbesondere vor, daß der Verschiebeweg des Stößels mindestens so groß, vorzugsweise größer ist als der Abstand, um den der Zapfen des Spreizniets eingestoßen wird. Es ist auf diese Weise möglich, mit ruckartigem Zustoßen größere Kräfte aufzubringen.

Erfindungsgemäß kann vorgesehen sein, daß die Sperreinrichtung ein zwischen dem Betätigungselement und dem Schaft wirkendes Sperrelement, beispielsweise einen Riegel, aufweist. Dieser Riegel kann beispielsweise im Sperrzustand in einer Quernut des Schaftes eingreifen. Bei Verdrehung des Betätigungselementes wird der Querriegel aus der Quernut des Schaftes ausgerückt, so daß dann der Griff mit dem Stößel gegenüber dem Werkzeugschaft verschoben werden kann.

Es wird von der Erfindung aber ebenfalls vorgeschlagen, daß die Sperreinrichtung ein direkt zwischen dem Schaft und dem Griff wirkendes Verriegelungselement aufweisen kann. Dies kann dann beispielsweise derart gelöst werden, daß das Betätigungselement den Schaft etwas verdreht, so daß dieser dann auf diese Weise axial verschiebbar wird.

Da das Werkzeug nicht nur zum Ausüben von Kraft in Richtung auf den Spreizniet gedacht ist, sondern auch zum Orientieren des Niets dienen soll, insbesondere an unzugänglichen Stellen, schlägt die Erfindung vor, dem Werkzeuggriff eine Form zu geben, die etwa der Form einer Ahle entspricht. Mit dieser Form kann sowohl eine hohe Kraft in Richtung des Schaftes aufgebracht werden als auch eine schnelle und sichere Orientierung durchgeführt werden.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine Seitenansicht eines Werkzeugs mit eingesetztem Spreizniet;
- Fig. 2: einen vergrößerten Teilschnitt durch die Sperreinrichtung;
- Fig. 3: einen der Fig. 2 entsprechenden Schnitt bei gelöster Sperreinrichtung aus einer anderen Richtung;
- Fig. 4: einen Längsschnitt durch das vordere Ende des Werkzeugschafts bei eingesetztem Spreizniet.

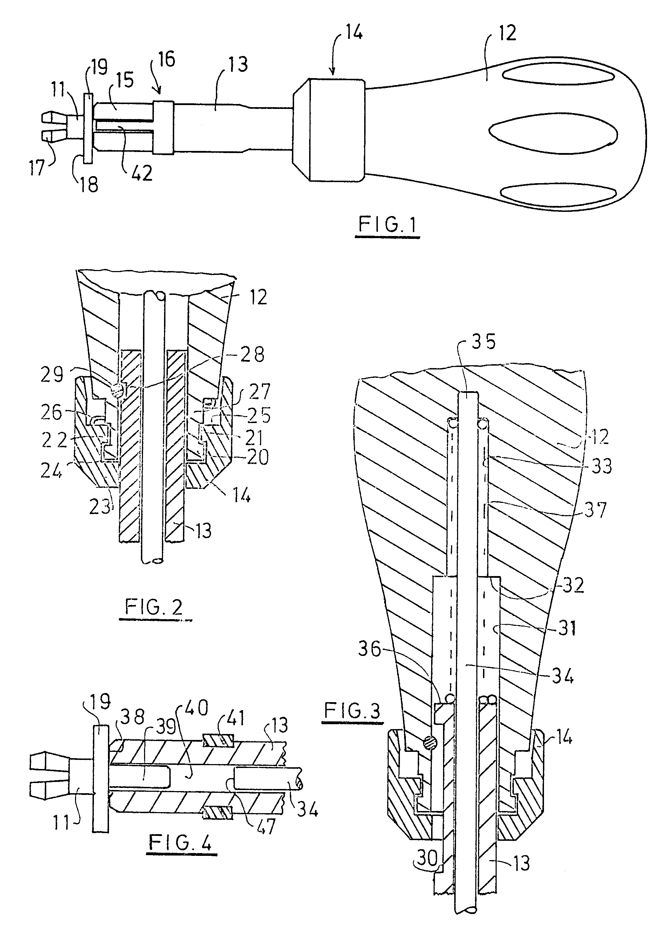

Das in Fig. 1 dargestellte Werkzeug zum Einsetzen eines Spreizniets 11 enthält einen Werkzeuggriff 12, einen Werkzeugschaft 13 und eine durch ein Betätigungselement 14 betätigbare Sperre, die eine Verschiebung des Werkzeugschaftes 13 gegenüber dem Handgriff 12, je nach Stellung des Betätigungselementes 14, zuläßt oder verhindert.

Im Bereich seines freien Endes 15 enthält der Werkzeugschaft 13 eine Klemmeinrichtung 16, mit deren Hilfe der in der Fig. 1 nicht sichtbare Zapfen des Spreizniets 11 und damit der Spreizniet 11 selbst an dem Werkzeug festgehalten wird. In der dargestellten Stellung wird der Spreizniet mit seinen Spreizteilen 17 durch ein Loch hindurchgesteckt, bis die Unterseite 18 des Bundes 19 des Spreizniets 11, ggf. unter Zwischenlage des zu befestigenden Gegenstandes, bündig anliegt.

Das Betätigungselement der Sperreinrichtung ist an dem dem Werkzeugschaft 13 zugewandten Ende des Handgriffs 12 an diesem befestigt und ist beispielsweise drehbar. Es kann daher bei Bedarf von Daumen und Zeigefinger der Hand, die den Handgriff 12 hält, verdreht werden.

Die Halterung des Betätigungselementes 14 der Sperreinrichtung ergibt sich aus Fig. 2, die in vergrößertem Maßstab einen Längsschnitt durch das Werkzeug im Bereich der Sperre darstellt.

Das vordere Ende des Handgriffs 12 weist einen verringerten Durchmesser auf. Am äußeren Ende enthält es hinter einer Rippe 20 eine umlaufende Nut 21 mit einem gegenüber den Rippen 20 verringerten Durchmesser. In ähnlicher Weise enthält das Betätigungselement 14, das die Form einer Kappe aufweist, eine nach innen gerichtete Rippe 22, die in die Nut 21 eingreift. Näher zum Boden 23 der Kappe hin enthält das Betätigungselement 14 eine nach innen offene Ringnut 24, die gegenüber den Rippen 22 einen vergrößerten Durchmesser aufweist. Die Axialerstreckung dieser Nut 24 entspricht etwa der Axialerstreckung der Rippen 20 des Handgriffs.

Sowohl die Rippe 20 als auch die Rippe 22 erstrecken sich nicht über den gesamten Umfang, so daß in einer bestimmten Drehstellung die Kappe aufgesetzt werden kann.

Zwischen der Rippe 22 und dem Handgriff 12 ist ein Ringraum 25 gebildet, in dem eine angedeutete Schenkelfeder 26 untergebracht ist. Die Schenkelfeder 26 greift mit ihrem einen Ende in eine Axialbohrung des Betätigungselementes 14 und mit ihrem anderen Ende in eine Axialbohrung des Handgriffs 12 ein. Die Festlegung könnte auch auf andere Art geschehen. Die Schenkelfeder kann sich ein oder mehrere Male um den Ansatz 27 des Handgriffs 12 herum erstrecken. Sie wirkt in Umfangsrichtung. Sie beaufschlagt das Betätigungselement 14 gegenüber dem Handgriff 12 in die in Fig. 2 dargestellte Stellung.

Der Werkzeugschaft 13 ist in dem Handgriff 12 längs verschiebbar, aber drehfest geführt. Dies kann beispielsweise dadurch geschehen, daß der Werkzeugschaft innerhalb des Handgriffs einen unrunden Querschnitt aufweist.

Der Werkzeugschaft 13 enthält im Bereich seines im Handgriff angeordneten inneren Endes eine Quernut 28, siehe links in Fig. 2.

Das kappenartige Betätigungselement ist sehnenartig von einem metallischen Querriegel in Form eines Stiftes 29 durchsetzt. Dieser Stift 29 liegt in der durch die Schenkelfeder 26 hergestellten Drehposition des Betätigungselementes 14 in der Quernut 28 des Werkzeugschaftes. Durch das Eingreifen dieses Querriegels 29 in der Nut 28, deren Breite etwa dem Durchmesser des Querriegels 29 entspricht, ist der Werkzeugschaft 13 gegenüber dem Handgriff 12 festgelegt. In dieser Stellung kann der Spreizniet 11 mit seinem Spreizteil 17 durch eine Öffnung hindurchgeschoben werden, bis der Bund 19 anliegt.

Das Betätigungselement kann nun aus der in Fig. 2 dargestellten Stellung, in die es durch die Schenkelfeder 26 beaufschlagt wird, um die Achse des Werkzeugschaftes 13 gedreht werden. Fig. 3 zeigt diese Stellung, wobei die Schnittebene der Fig. 3 durch die gleiche Stelle des Betätigungselementes 14 gelegt ist, also den Handgriff 12 in einer verdrehten Stellung darstellt.

Da der Werkzeugschaft 13 drehfest mit dem Handgriff 12 verbunden ist, ist die Orientierung des Querriegels 29 zu dem Werkzeugschaft 13 jetzt geändert. Der Querriegel 29 liegt nicht mehr in der Quernut 28 des Werkzeugschaftes, sondern an einer Stelle, an der der Werkzeugschaft 13 eine sich über eine größere Länge erstreckende Abflachung 30 aufweist. Die Abflachung 30 ist so tief, daß der Querriegel 29 durch sie hindurchbewegt werden kann. In dieser dargestellten Stellung kann der Werkzeuggriff 12 in Richtung auf das freie Ende des Werkzeugschaftes verschoben werden oder umgekehrt, der Werkzeugschaft 13 in das Innere des Werkzeuggriffs 12 hingeschoben werden. Dies ist möglich, da der Werkzeugschaft 13 in einem Sackloch 31 angeordnet ist. Dieses Sackloch 31 weist einen Querschnitt auf, der dem Querschnitt des Werkzeugschaftes 13 entspricht. Es ermöglicht das Hineinschieben des Werkzeugschaftes 13 bis zu einer Stufe 32, an der sich der Durchmesser des Sacklochs 31 stufenartig verkleinert, so daß hier ein Sackloch 33 mit verringertem Durchmesser gebildet ist. In diesem Sackloch ist eine einen Stößel bildende Stange 34 untergebracht, die mit ihren in Fig. 3 oberen Ende 35 fest mit dem Handgriff 12 verbunden ist.

Eine andere Möglichkeit besteht darin, und diese wird auch aus fertigungstechnischen Gründen bevorzugt, daß die Stange 34 unmittelbar vor ihrem inneren Ende eine quer verlaufende Sicherungsscheibe aufweist, die auf dem Boden des Sacklochs 33 mit dem verringerten Durchmesser aufliegt.

Zwischen dieser in Fig. 3 nicht dargestellten Sicherungsscheibe bzw. dem Boden des Sacklochs 33 mit verringertem Durchmesser und der inneren Stirnfläche 36 des Werkzeugschafts 13 erstreckt sich eine angedeutete Druckfeder 37. Diese beaufschlagt den Werkzeugschaft 13 in seine ausgefahrene Stellung, die durch einen im einzelnen nicht dargestellten Anschlag definiert ist. In dieser Normalstellung liegt die vordere äußere Stirnfläche 47 der Stange 34 in axialem Abstand vor der äußeren Stirnfläche 38 des Werkzeugschaftes 13, siehe Fig. 4.

Diese Fig. 4 zeigt einen Längsschnitt durch das vordere Ende des Werkzeugs. Der Spreizniet 11 wird so von dem Werkzeug gehalten, daß der zu seiner Aufspreizung dienende Zapfen 39, der an der Vorderseite des Bundes 19 herausragt, in die Längsöffnung 40 des Werkzeugschafts 13 eingesetzt ist. Die unter Bezugnahme auf Fig. 1 bereits erwähnte Klemmeinrichtung enthält an einem umlaufenden Ring 41 einstückig abgeformte Federarme 42, vorzugsweise drei derartige Federarme 42, gleichmäßig über den Umfang verteilt. Die Federarme 42 sind so ausgebildet, daß sie radial in das Innere der Längsöffnung 40 durch entsprechende Schlitze hineinragen. Dadurch wird der Zapfen 39 festgehalten. In dieser Stellung wird der Spreizniet mit Hilfe des Werkzeugs in die Öffnung eingesetzt. Anschließend wird das Betätigungselement 14 betätigt, beim dargestellten Ausführungsbeispiel durch ein Verdrehen. Der Riegel gelangt außer Eingriff mit der Quernut 28, so daß jetzt der Griff 12 gegenüber dem Werkzeugschaft 13 verschiebbar ist. Beim Vorwärtsschieben des Griffes 12 in Richtung auf den Spreizniet 11 nimmt der Griff die als Stößel wirkende Stange 34 mit, deren vordere Stirnfläche 47 sich nun dem Zapfen nähert, diesen berührt und bei Weiterschieben vorwärtsschiebt. Der Abstand zwischen der inneren Stirnfläche 36 des Werkzeugschafts 13 und der Stufe 32 des Sacklochs 31 ist so gewählt, daß ein Verschieben der Stange 34 so weit erfolgen kann, bis die Stirnfläche 47 der Stange 34 bündig mit der Stirnfläche 38 des Werkzeugschafts 13 verläuft.

## Patentansprüche

1. Werkzeug zum manuellen Setzen von Spreiznieten, mit
einem Werkzeugschaft (13) zum Halten des Spreizniets (11),
einem Werkzeuggriff (12), der
am anderen Ende des Schafts (13) angeordnet ist,
einem Stößel (34), der
an bzw. in dem Werkzeug gehaltert ist,
den Schaft (13) mindestens teilweise in Axialrichtung durchsetzt, und
in Längsrichtung verschiebbar ist, sowie
einer Sperreinrichtung, die
je nach Stellung die Verschiebbarkeit des Stößels (34) gegenüber dem Werkzeugschaft (13) ermöglicht oder verhindert und
ein in Sperrstellung federbeaufschlagtes Betätigungselement (14) aufweist,
dadurch gekennzeichnet, daß
das Betätigungselement (14) der Sperreinrichtung an dem dem freien Ende (38) des Schafts (13) zugewandten Ende des Griffs (12) angeordnet ist,
gegenüber dem Griff (12) und/oder dem Schaft (13) um die Achse des Werkzeugschafts (13) verdrehbar ausgebildet ist und
als Kappe ausgebildet ist.

2. Werkzeug zum manuellen Setzen von Spreiznieten mit
einem Werkzeugschaft (13) zum Halten des Spreizniets (11),
einem Werkzeuggriff (12), der
am anderen Ende des Schafts (13) angeordnet ist,
einem Stößel (34), der
an bzw. in dem Werkzeug gehaltert ist,
den Schaft (13) mindestens teilweise in Axialrichtung durchsetzt, und
in Längsrichtung verschiebbar ist,
einer Sperreinrichtung, die
je nach Stellung die Verschiebbarkeit des Stößels (34) gegenüber dem Werkzeugschaft (13) ermöglicht oder verhindert und
ein in Sperrstellung federbeaufschlagtes Betätigungselement (14) aufweist,
dadurch gekennzeichnet, daß
das Betätigungselement (14) der Sperreinrichtung an dem dem freien Ende (38) des Schafts (13) zugewandten Ende des Griffs (12) angeordnet ist,
das Betätigungselement (14) durch Ziehen auslösbar ist und
als Kappe ausgebildet ist.

3. Werkzeug nach einem der vorhergehenden Ansprüche, bei dem der Werkzeuggriff (12) mindestens teilweise axial verschiebbar am Schaft (13) geführt und der Stößel (34) durch den Griff (12) verschiebbar ist.

4. Werkzeug nach einem der vorhergehenden Ansprüche, bei dem der Schaft (13) im Bereich seines vorderen Endes (15) eine Klemmeinrichtung (16) für den Spreizniet (11) aufweist.

5. Werkzeug nach Anspruch 4, bei dem die Klemmeinrichtung (16) mindestens zwei den Zapfen (39) des Spreizniets (11) radial nach innen beaufschlagende, in Schlitzen des Werkzeugschaftes (13) angeordnete Federarme (42) aufweist.

6. Werkzeug nach einem der vorhergehenden Ansprüche, bei dem der Schaft (13) drehfest mit dem Griff (12) verbunden ist.

7. Werkzeug nach einem der vorhergehenden Ansprüche, mit einer Feder (37), die das Werkzeug in eine Position beaufschlagt, in der das freie Ende (47) des von dem Griff betätigbaren Stößels (34) von dem freien Ende (38) des Werkzeugschaftes einen axialen Abstand aufweist.

8. Werkzeug nach einem der vorhergehenden Ansprüche, bei dem der Verschiebungsweg des Stößels (34) größer ist als die überstehende Länge des Spreizzapfens (39) des Spreizniets (11).

9. Werkzeug nach einem der vorhergehenden Ansprüche, bei dem die Sperreinrichtung einen zwischen ihrem Betätigungselement (14) und dem Schaft (13) wirkenden Riegel (29) aufweist.

10. Werkzeug nach einem der vorhergehenden Ansprüche, bei dem die Sperreinrichtung ein zwischen dem Schaft (13) und dem Griff (12) wirkendes Verriegelungselement aufweist.

11. Werkzeug nach einem der vorhergehenden Ansprüche, bei dem die Sperreinrichtung einen Querriegel (29) aufweist, der in Sperrstellung in eine Quernut (28) des Schafts (13) eingreift.

12. Werkzeug nach einem der vorhergehenden Ansprüche, bei dem der Griff (12) etwa die Form eines Ahlengriffes aufweist.

## Claims

1. Tool for the manual setting of split rivets with a tool shank (13) for holding the split rivet (11), a tool handle (12) which is located at the other end of the shank (13), a ram (34), which is mounted on or in the tool, at least partly traverses the shank (13) in the axial direction and is longitudinally displaceable, as well as an arresting device which, as a function of the position, permits or prevents the displaceability of the ram (34) with respect to the tool shank (13) and has an operating element (14) spring-loaded in the arresting position, characterized in that the operating element (14) of the arresting device is located on the end of the handle (12) facing the free end (38) of the shank (13), is constructed so as to rotate about the axis of the tool shank (13) with respect to the handle (12) and/or the shank (13) and is constructed as a cap.

2. Tool for the manual setting of split rivets with a tool shank (13) for holding the split rivet (11), a tool handle (12) which is located at the other end of the shank (13), a ram (34), which is mounted on or in the tool, at least partly traverses the shank (13) in the axial direction and is longitudinally displaceable, as well as an arresting device which, as a function of the position, permits or prevents the displaceability of the ram (34) with respect to the tool shank (13) and has an operating element (14) spring-loaded in the arresting position, characterized in that the operating element (14) of the arresting device is located on the end of the handle (12) facing the free end (38) of the shank (13), the operating element (14) can be disengaged by pulling and is constructed as a cap.

3. Tool according to any one of the preceding claims, wherein the tool handle (12) is at least partly axially displaceably guided on the shank (13) and the ram (34) is displaceable by the handle (12).

4. Tool according to any one of the preceding claims, wherein the shank (13) has a clamping device (16) for the split rivet (11) in the vicinity of its front end (15).

5. Tool according to claim 4, wherein the clamping device (16) has at least two spring arms (42), located in slots in the tool shank (13) and which urge radially inwards the pin (39) of the split rivet (11).

6. Tool according to any one of the preceding claims, wherein the shank (13) is connected in non-rotary manner with the handle (12).

7. Tool according to any one of the preceding claims having a spring (37), which urges the tool into a position in which the free end (47) of the ram (34) operable by the handle has an axial spacing from the free end (38) of the tool shank.

8. Tool according to any one of the preceding claims, wherein the displacement path of the ram (34) exceeds the projecting length of the pin (39) of the split rivet (11).

9. Tool according to any one of the preceding claims, wherein the arresting device has a bolt (29) acting between its operating element (14) and the shank (13).

10. Tool according to any one of the preceding claims, wherein the arresting device has a locking element acting between the shank (13) and the handle (12).

11. Tool according to any one of the preceding claims, wherein the arresting device has a transverse bolt (29), which in the arresting position engages in a transverse groove (28) of the shank (13).

12. Tool according to any one of the preceding claims, wherein the handle (12) is approximately in the form of a broach handle.

## Revendications

1. Outil pour poser manuellement des rivets à expansion, comprenant une tige d'outil (13) pour maintenir le rivet à expansion (11), un manche d'outil (12) placé à l'autre extrémité de la tige (13), un poussoir (34) qui est maintenu sur ou dans l'outil, qui traverse au moins partiellement la tige (13) dans la direction de l'axe et qui peut être déplacé dans la direction longitudinale, ainsi qu'un dispositif de blocage qui, en fonction de sa position, permet ou empêche le déplacement du poussoir (34) par rapport à la tige d'outil (13) et qui présente un élément d'actionnement (14) sollicité par un ressort en position de blocage, caractérisé en ce que l'élément d'actionnement (14) du dispositif de blocage est placé à l'extrémité du manche (12) qui est opposée à l'extrémité libre (38) de la tige (13), est réalisé de manière à pouvoir tourner par rapport au manche (12) et/ou à la tige (13) autour de l'axe de la tige d'outil (13) et est réalisé sous la forme d'un capuchon.

2. Outil pour poser manuellement des rivets à expansion, comprenant une tige d'outil (13) pour maintenir le rivet à expansion (11), un manche d'outil (12) placé à l'autre extrémité de la tige (13), un poussoir (34) qui est maintenu sur ou dans l'outil, qui traverse au moins partiellement la tige (13) dans la direction de l'axe, qui peut être déplacé dans la direction longitudinale, ainsi qu'un dispositif de blocage qui, en fonction de sa position, permet ou empêche le déplacement du poussoir (34) par rapport à la tige d'outil (13) et qui présente un élément d'actionnement (14) sollicité par un ressort en position de blocage, caractérisé en ce que l'élément d'actionnement (14) du dispositif de blocage est placé à l'extrémité du manche (12) qui est opposée à l'extrémité libre (38) de la tige (13), en ce que l'élément d'actionnement (14) peut être déclenché par traction et est réalisé sous la forme d'un capuchon.

3. Outil selon l'une des revendications précédentes, dont le manche d'outil (12) est guidé sur la tige (13) de manière à pouvoir au moins être partiellement déplacé dans la direction de l'axe et dont le poussoir (34) peut être déplacé par le manche (12).

4. Outil selon l'une des revendications précédentes, dont la tige (13) présente dans la zone de son extrémité avant (15) un dispositif de serrage (16) pour le rivet à expansion (11).

5. Outil selon la revendication 4, dont le dispositif de serrage (16) présente au moins deux bras à ressort (42) disposés dans des fentes de la tige d'outil (13) et sollicitant le pivot (39) du rivet à expansion (11) radialement vers l'intérieur.

6. Outil selon l'une des revendications précédentes, dont la tige (13) est reliée au manche (12) de façon solidaire en rotation.

7. Outil selon l'une des revendications précédentes, comprenant un ressort (37) qui met l'outil dans une position dans laquelle l'extrémité libre (47) du poussoir (34) actionné par le manche présente un écart axial par rapport à l'extrémité libre (38) de la tige d'outil.

8. Outil selon l'une des revendications précédentes, dans le cas duquel le déplacement du poussoir (34) est supérieur à la longueur en saillie du pivot d'expansion (39) du rivet à expansion (11).

9. Outil selon l'une des revendications précédentes, dont le dispositif de blocage présente un verrou (29) agissant entre son élément d'actionnement (14) et la tige (13).

10. Outil selon l'une des revendications précédentes, dont le dispositif de blocage présente un élément de verrouillage agissant entre la tige (13) et le manche (12).

11. Outil selon l'une des revendications précédentes, dont le dispositif de verrouillage présente un verrou transversal (29) qui, en position de blocage, se met en prise avec une rainure transversale (28) de la tige (13).

12. Outil selon l'une des revendications précédentes, dont le manche (12) présente approximativement la forme d'un manche de poinçon.
